# FASCICULE DE BREVET EUROPEEN

(11) **EP 3 688 974 B1**
(45) Date de publication et mention de la délivrance du brevet: **11.01.2023**
(21) Numéro de dépôt: 18783072.4
(22) Date de dépôt: 24.09.2018
(51) Int. Cl.: H04M 3/42, H04M 3/48, H04M 7/00

(54) **PROCÉDÉ DE GESTION D'UN ÉCHEC D'ÉTABLISSEMENT D'UNE COMMUNICATION ENTRE UN PREMIER ET UN SECOND TERMINAL**
VERFAHREN ZUR VERWALTUNG DES SCHEITERNS DES AUFBAUS EINER KOMMUNIKATION ZWISCHEN EINEM ERSTEN UND EINEM ZWEITEN ENDGERÄT
METHOD FOR MANAGING A FAILURE TO ESTABLISH A COMMUNICATION BETWEEN A FIRST AND A SECOND TERMINAL

(30) Priorité: 29.09.2017 FR 1759044
(43) Date de publication de la demande: 05.08.2020
(73) Titulaire: Orange, 92130 Issy-les-Moulineaux (FR)
(72) Inventeur: SUART, Christophe, 92326 Châtillon Cedex (FR); GESTRAUD, Yann, 92326 Châtillon Cedex (FR)
(86) Numéro de dépôt international: PCT/FR2018/052332
(87) Numéro de publication internationale: WO 2019/063920

(56) Documents cités:
- US-A1- 2006 227 949
- US-A1- 2015 312 409
- US-A1- 2016 127 534

## Description

La présente invention appartient au domaine des télécommunications, et vise en particulier un procédé de réponse automatique en cas d'échec d'une tentative d'établissement d'une communication.

### Art antérieur

Les systèmes de messageries vocales classiques permettent à un utilisateur appelant de déposer un message vocal à l'attention d'un utilisateur appelé lorsque ce dernier n'est pas joignable. Sur réponse d'un code d'erreur relatif à l'échec d'établissement d'un appel, la communication est redirigée vers un serveur vocal associé à l'appelé et adapté pour enregistrer un message vocal. Une annonce personnalisée peut être jouée pour inviter l'appelant à enregistrer un message vocal qui sera consulté ultérieurement.

Le destinataire du message est généralement notifié lorsqu'un message est déposé à son intention, par exemple au moyen d'un SMS (short Message Service). Le destinataire peut consulter ses messages en établissant une communication vocale avec le serveur de messagerie. L'utilisateur de la messagerie peut gérer ses messages en déclenchant des actions en transmettant des codes DTMF (Dual Tone Multi-Frequency) adaptés. Il peut par exemple écouter un message, le supprimer ou encore demander à être mis en relation avec le correspondant ayant déposé le message.

L'usage des DTMF pour piloter un serveur vocal n'est pas optimal d'un point de vue ergonomique. En effet, l'utilisateur doit écarter le combiné téléphonique de son oreille, saisir le code désiré sur le clavier du téléphone, puis replacer combiné sur son oreille. Pour pallier à cet inconvénient, certains services de messagerie permettent la gestion des messages à partir de commandes vocales interprétées par le système de messagerie.

Une autre évolution concernant l'accès à la messagerie vocale par le destinataire d'un message est la messagerie vocale visuelle (MVV). L'accès à la messagerie se fait alors directement à partir du terminal au travers d'une interface graphique, sans qu'il soit nécessaire d'établir une communication vocale. Les messages reçus sont affichés sous forme de liste et associés à des éléments d'interaction permettant par exemple à l'utilisateur d'écouter ou de supprimer des messages de façon non-linéaire, ou de rappeler un correspondant.

Ainsi, l'accès à la messagerie par le destinataire d'un message a été amélioré, autant d'un point de vue technique qu'ergonomique.

Toutefois, l'accès au service pour le déposant n'a pas bénéficié de telles évolutions, même si quelques améliorations ont pu être apportées comme par exemple avec la demande de Brevet Européen EP783219A2 qui décrit une méthode permettant de personnaliser une annonce d'accueil en fonction du numéro de l'appelant.

En particulier, un utilisateur dont l'appel est redirigé vers une messagerie n'a d'autre choix que de raccrocher ou de laisser un message, voire de modifier un message enregistré à partir de commandes DTMF.

D'autres documents de l'état de la technique décrivant le traitement des appels manqués sont les suivants US2015312409, US2016127534 et US2006227949.

Il existe donc un besoin pour améliorer techniquement et ergonomiquement le service de messagerie pour l'appelant.

### Résumé de l'invention

A cet effet, il est proposé un procédé selon la revendication 1.

Ainsi, l'appelant n'est pas mis en relation avec un serveur vocal lorsque le correspondant n'est pas joignable. A la place, un message personnalisé par l'appelé est transmis au terminal appelant par l'intermédiaire d'une connexion de donnée, par exemple par un protocole de messagerie instantané conforme au standard RCS.

Le message est par exemple un message instantané conforme au standard RCS, comme par exemple une « Rich Card ». L'utilisateur du terminal appelant obtient ainsi immédiatement des indications sur la joignabilité du correspondant, comme par exemple des coordonnées alternatives. A partir de ce message, l'utilisateur du terminal appelant peut par exemple déclencher une communication de messagerie instantanée selon une autre modalité de communication.

Une modalité de communication au sens de l'invention est caractérisée par les médias ou les protocoles de communication mis en oeuvre dans la communication, ou encore par les terminaux entre lesquels la communication est établie.

Un tel procédé augmente les possibilités de pouvoir joindre un correspondant et améliore l'ergonomie du service.

Selon un mode de réalisation particulier, le message comprend un élément d'interaction adapté pour déclencher l'enregistrement d'un message vocal par le terminal appelant et l'envoi du message enregistré par l'intermédiaire d'un protocole de messagerie instantanée.

Le message vocal est enregistré localement sur le terminal puis envoyé au moyen d'une messagerie instantanée. Il n'est plus nécessaire qu'une communication vocale soit au préalable établie avec un système de messagerie vocale. L'enregistrement et l'envoi sont réalisés localement sur le terminal, et l'ergonomie peut être nettement améliorée.

D'autre part, l'utilisation d'un serveur de messagerie dédié et centralisé n'est plus nécessaire. Le message est transmis au correspondant en utilisant l'infrastructure et les services de transfert de fichiers déployés pour la mise en oeuvre de la messagerie instantanée. Par exemple, la distribution du message vocal peut être différée via un service de type « store and forward » jusqu'à ce que l'utilisateur destinataire soit disponible.

Selon une réalisation particulière, le procédé est tel que la carte d'accueil comprend en outre au moins un identifiant de communication alternatif associé à l'utilisateur du terminal appelé.

La carte d'accueil comprend une ou plusieurs adresses alternatives permettant de joindre le correspondant. Par exemple, il peut s'agir d'un autre numéro de téléphone, d'une SIP URI (Universal Resource Identifier), d'une adresse email ou encore d'un identifiant sur un réseau social. De cette façon, l'utilisateur n'a pas à connaître toutes les coordonnées permettant de joindre le correspondant.

Selon un mode particulier de réalisation, le au moins un identifiant de communication alternatif est sélectionné et inséré dans la carte d'accueil par le serveur de communication selon des critères de joignabilité du terminal appelé.

Les critères de joignabilité sur la base desquels la seconde adresse est sélectionnée sont par exemple des critères de plage horaire, de disponibilité obtenus à partir d'un agenda, ou encore de localisation.

De cette façon, le procédé offre à l'appelant la possibilité de contacter le correspondant d'une manière qui est adaptée au contexte. Par exemple, la carte d'accueil peut comporter une indication selon laquelle le correspondant est joignable sur son lieu de travail et fournir à l'appelé un moyen d'établir une communication vers un téléphone professionnel de l'appelé.

En variante, les coordonnées fournies pour joindre le correspondant peuvent être masquées dans la carte d'accueil reçue de façon à permettre à l'appelant de contacter son correspondant sans pour autant en divulguer les coordonnées. La confidentialité d'une ligne directe professionnelle peut ainsi être conservée.

Selon un mode particulier de réalisation de l'invention, le message de réponse est en outre généré à partir d'un carnet d'adresses associé au terminal appelé.

Une telle disposition permet une personnalisation de la carte d'accueil en fonction de l'appelant. Il est ainsi possible de fournir des informations de joignabilité différentes selon que l'identifiant d'appel du terminal appelant est compris dans un carnet d'adresses associé au terminal appelé.

Par exemple, un utilisateur peut composer au préalable différents messages de réponse à transmettre lorsqu'il n'est pas joignable et associer ces messages à différents contacts d'un carnet d'adresses, ou différentes catégories de contact. Ainsi, des contacts personnels, professionnels ou inconnus peuvent recevoir des données de contact différenciées.

Selon une réalisation particulière, le procédé est tel qu'il comprend en outre, lorsqu'une carte d'accueil a été obtenue, une étape de transmission, en réponse au message comprenant une indication selon laquelle la communication ne peut pas être établie, d'un message adapté pour annuler la tentative d'établissement de communication sans redirection vers une messagerie vocale.

Une telle disposition permet de mettre fin à la tentative d'appel de l'appelant pour éviter que l'appel ne soit redirigé vers une messagerie vocale. Un tel message peut comporter un identifiant adapté pour identifier la communication parmi les communications établies ou en cours d'établissement dans le réseau de télécommunication au travers duquel le terminal appelant tente d'établir une communication et une indication selon laquelle la communication doit être terminée.

Selon un mode de réalisation particulier, la carte d'accueil est telle que les informations relatives à la joignabilité de l'utilisateur appelé sont associées à au moins un élément sélectionné parmi les éléments compris dans la liste suivante :
- une plage horaire,
- une donnée de localisation du premier terminal et/ou du second terminal,
- une vitesse de déplacement,
- un statut de présence,
- un critère de validité.

Les chances pour l'appelant de pouvoir contacté le correspondant sont alors augmentées.

Le fait de communiquer une plage horaire associée à un identifiant ou une modalité d'appel permet à l'appelant de renouveler l'appel à un moment opportun pour que l'appelant puisse accepter la communication. Par exemple, il peut s'agir d'horaires d'ouverture d'une boutique.

Le fait d'associer une localisation géographique du terminal appelé à une information de joignabilité, tel que par exemple un numéro de téléphone alternatif, permet à un utilisateur du terminal appelant de sélectionner une modalité de communication adaptée, comme par exemple d'établir une communication vers une ligne fixe du domicile de l'appelé lorsqu'il est localisé chez lui.

Lorsqu'une vitesse de déplacement, ou une indication selon laquelle l'appelé se déplace comprise dans la carte d'accueil, la carte d'accueil peut masquer temporairement, tant que l'utilisateur du terminal appelé se déplace, un mode de communication qui n'est pas compatible avec le fait qu'il se déplace. Par exemple, un numéro de téléphone mobile peut être masqué tant que l'utilisateur se déplace à une certaine vitesse.

Les informations de joignabilité communiquées dans la carte d'accueil peuvent dépendre d'un statut de présence configuré par l'utilisateur sur un système de messagerie instantanée.

Les informations de joignabilité peuvent en outre être conditionnées par différents critères de validité, comme par exemple une période pendant laquelle le correspondant peut être joint selon une modalité particulière.

Selon un mode de réalisation particulier, le procédé comprend en outre une étape d'obtention de capacités de communication du terminal appelant, la carte d'accueil étant transmise selon une technologie de communication compatible avec le terminal appelant.

La carte d'accueil n'est transmise au terminal appelant que si une technologie de transmission compatible est supportée par ce dernier. Dans le cas où le terminal appelant n'est pas compatible, l'appel peut être redirigé vers une messagerie vocale classique.

Selon un autre aspect, l'invention concerne un procédé selon la revendication 9.

Ainsi, lorsqu'un appel ne peut aboutir, un terminal peut recevoir, via une connexion conforme à un protocole de messagerie instantanée, une carte d'accueil, c'est-à-dire un message comportant des informations sur la joignabilité de l'utilisateur appelé. Un tel message peut par exemple fournir une ou plusieurs adresses de contact pour le correspondant, ou encore inviter l'utilisateur à joindre le correspondant selon une autre modalité, et/ou à un autre moment. La carte d'accueil comprend des moyens pour établir directement une communication selon une modalité alternative. De tels moyens sont par exemple un identifiant du correspondant sur un réseau social, une adresse email, ou encore un identifiant de messagerie instantanée.

Une telle carte d'accueil peut en particulier inviter l'utilisateur à envoyer un message vocal vers le correspondant injoignable par l'intermédiaire d'un protocole de messagerie instantanée, tel que par exemple un protocole conforme au standard RCS. Une adresse de destination associée au terminal appelé ou à l'utilisateur du terminal appelé étant comprise dans la carte d'accueil reçue.

Selon encore un autre aspect, et de façon correspondante au procédé de gestion, il est proposé un dispositif selon la revendication 10.

L'invention concerne également un serveur de notification comprenant un dispositif de gestion d'une communication tel que décrit précédemment.

Selon encore un autre aspect, et de façon correspondante au procédé de réception d'une carte d'accueil, il est proposé un dispositif selon la revendication 12.

L'invention concerne aussi un terminal de communication comprenant un dispositif tel que décrit précédemment.

Les dispositifs, serveurs et terminaux présentent des avantages analogues à ceux des procédés auxquels ils correspondent.

Dans un mode particulier de réalisation, les différentes étapes des procédés de notification et de réception sont déterminées par des instructions de programmes d'ordinateurs.

En conséquence, l'invention vise aussi un programme d'ordinateur selon la revendication 14.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'enregistrement selon la revendication 15.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, une mémoire flash, ou encore un moyen d'enregistrement magnétique, comme par exemple un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

### Brève description des figures

D'autres caractéristiques et avantages apparaîtront à la lecture de modes de réalisation préférés décrits en référence aux dessins annexés parmi lesquels :
- la figure 1 illustre une architecture adaptée pour la mise en oeuvre de l'invention selon un mode de réalisation particulier,
- La figure 2 illustre les principales étapes du procédé de gestion d'une communication selon une réalisation particulière,
- La figure 3 illustre les principales étapes du procédé de réception d'une carte d'accueil selon un mode particulier de réalisation,
- la figure 4 est un chronogramme représentant des messages échangés entre différentes entités pour la mise en oeuvre des procédés de gestion d'une communication et de réception, selon une réalisation particulière,
- la figure 5 représente de manière simplifiée l'architecture d'un dispositif de gestion d'une communication selon un mode particulier de réalisation, et
- la figure 6 illustre de manière simplifiée l'architecture d'un dispositif de réception d'une carte d'accueil selon un mode particulier de réalisation.

### Description détaillée de l'invention

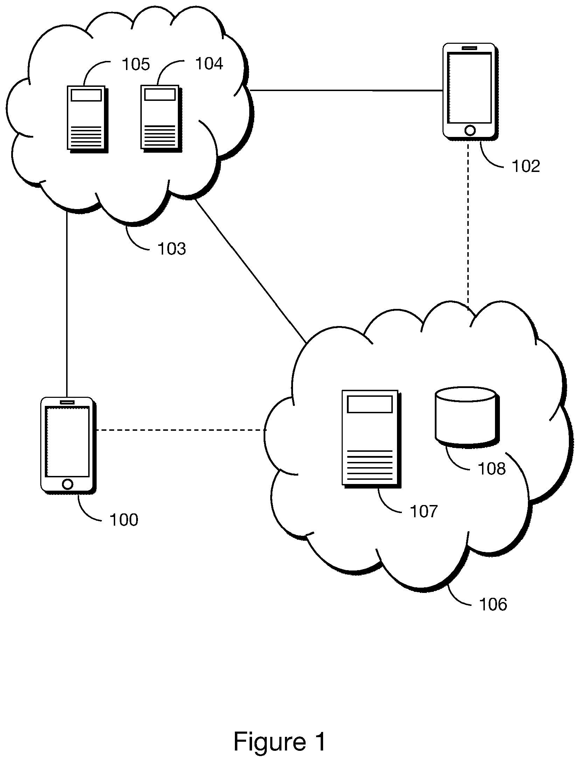

La figure 1 représente un premier terminal 100, par exemple un téléphone intelligent de type « smartphone », connecté à un réseau de communication mobile 103 tel qu'un réseau GSM (Global System for Mobile communication). Le réseau de communication 103 permet au terminal 100 d'établir des communications vocales avec le terminal 102 de manière classique. Le terminal 102 est par exemple un terminal de type smartphone.

Le terminal 100 et le terminal 102 sont respectivement associés à un premier et à un second identifiant d'appel. L'identifiant d'appel d'un terminal peut être configuré dans une carte SIM insérée dans le terminal. Il s'agit par exemple d'un numéro MSISDN (Le MSISDN ou Mobile Station ISDN Number), c'est-à-dire un identifiant public permettant aux terminaux d'être contactés.

Le réseau de télécommunication 103 comprend en outre un système de messagerie vocale 104 adapté pour gérer des boites vocales associées aux utilisateurs du réseau de communication. Par exemple, l'identifiant d'appel du terminal 102 est associé à une boite vocale dans le système de messagerie 104. Ainsi, lorsque par exemple l'utilisateur du terminal 102 n'est pas joignable, l'appel est redirigé vers le serveur vocal 104 qui invite l'appelant à déposer un message à l'attention de l'utilisateur du terminal 102. L'utilisateur du terminal 102 peut consulter des messages vocaux déposés à son attention sur le serveur vocal 104.

Le réseau 103 comprend aussi un équipement de gestion des appels 105, comme par exemple un MSC (Mobile services Switching Center). Cet équipement peut correspondre à un ou plusieurs serveurs du réseau 103, et permet en particulier de rediriger un appel vers la messagerie 104 lorsqu'un correspondant n'est pas joignable. Si le réseau 103 supporte des services de réseau intelligent de type CAMEL phase 1, 2 ou 3, le serveur 105 peut être un serveur SCP (Service Control Function) adapté pour communiquer avec un MSC par l'intermédiaire d'un serveur SSF (Service Switching Function). Un SCP peut appliquer des traitements et retourner une action à réaliser vers le SSF, comme par exemple des actions « Continue », « Release », ou « Connect » vers un numéro spécifique ou un serveur vocal, avec éventuellement la souscription à des notifications d'état d'un l'appel. Le SSF peut appliquer des traitements au niveau MSC, le MSC poursuivant le traitement de l'appel selon les ordres qui ont été donnés. Ainsi, un SCP ou un MSC modifié selon l'invention permet l'échange avec le serveur 107 de messages adaptés pour mettre en œuvre le procédé.

La figure 1 représente également un second réseau de télécommunication 106. Un tel réseau est par exemple un réseau IMS mettant en œuvre des services de communication conformes au standard RCS (Rich Communication Suite). Le réseau de télécommunication 106 comprend un serveur 107, tel qu'un serveur d'application (AS pour Application Server) et une base de données 108.

Dans l'architecture de la figure 1, les terminaux 100 et 102 sont également connectés au réseau IMS 106. Par exemple, le terminal 102 peut être connecté au réseau 103 par l'intermédiaire d'un réseau d'accès cellulaire et au réseau 106 par l'intermédiaire d'un point d'accès WiFi.

Les réseaux 103 et 106 sont interconnectés au moyen d'un équipement passerelle, tel qu'un GMSC (Gateway MSC) ou un GGSN (gateway GPRS support node), de telle façon que les serveurs 105 et 107 peuvent échanger des messages.

Toutefois, les réseaux 103 et 106 peuvent également correspondre à un unique réseau IMS.

Le réseau 106 permet aux terminaux d'établir des connexions de données avec d'autres terminaux ou équipements, et notamment d'établir des communications conformes à un protocole de messagerie instantanée tel que défini dans le standard RCS.

Le standard RCS permet en effet d'établir des communications de messagerie instantanée au cours desquelles des correspondants peuvent échanger des messages textuels pouvant contenir des fichiers multimédias et des éléments d'interactions, permettant de déclencher des actions par exemple. Par exemple, les messages RCS de type « rich card » peut contenir des éléments de type « suggested action ». De tels éléments peuvent être restitués par les terminaux de différentes façon, par exemple sous la forme de boutons ou de liens cliquables.

L'invention n'est toutefois pas limitée à une telle architecture. En particulier, le réseau 103 peut être un réseau de téléphonie fixe ou un réseau de communication IMS. Les identifiants des terminaux peuvent alors être des numéros conformes à la norme ITU E.164 ou des SIP URI (Universal Resource Identifier). En particulier, dans certains modes de réalisation particuliers, les réseaux 103 et 106 peuvent n'être qu'un seul réseau, ou la répartition des équipements et des fonctions décrites ci-après entre les réseaux 103 et 106 peut varier.

Une telle architecture permet au serveur 105 de transmettre un message à destination du serveur 107 en cas d'impossibilité d'établir une communication. Le message transmis par le serveur 105 comprend au moins un identifiant du terminal 100, un identifiant du terminal 102 et une indication selon laquelle un appel ne peut pas être établi. Sur réception de ce message, le serveur 107 peut consulter une base de données 108 dans laquelle sont stockés des enregistrements. Les enregistrements de la base de données 108 permettent d'associer une carte d'accueil particulière avec l'identité publique du terminal 102. Ainsi, sur réception du message indiquant un échec d'établissement de la communication, le serveur 107 peut sélectionner une carte d'accueil particulière et la transférer au terminal 100 selon un protocole de messagerie instantanée. Lorsqu'une carte d'accueil a pu être sélectionnée dans la base de données 108, un message configuré pour terminer la communication initiée par le terminal 100 est envoyé par le serveur 107 à destination du serveur 105. Ainsi, la communication n'est pas redirigée vers le système de messagerie vocale 104. A la place, le terminal 100 reçoit une carte d'accueil par messagerie instantanée.

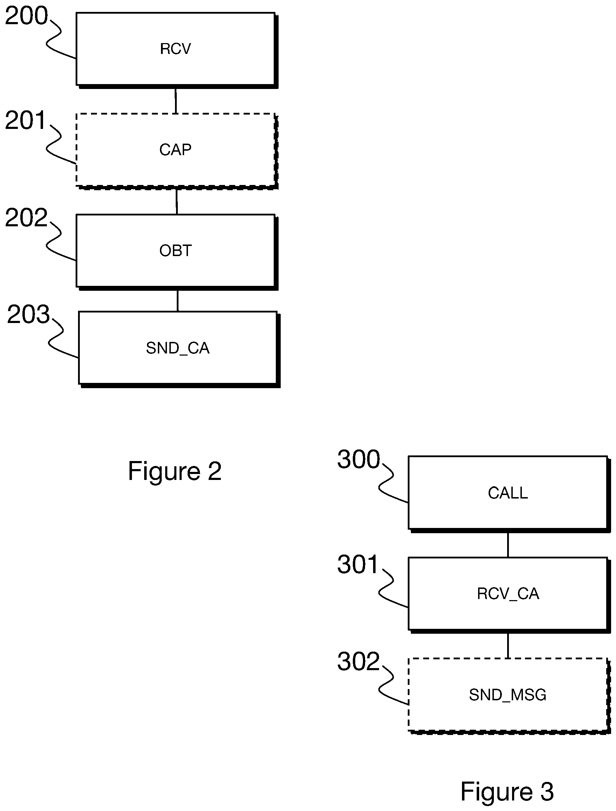

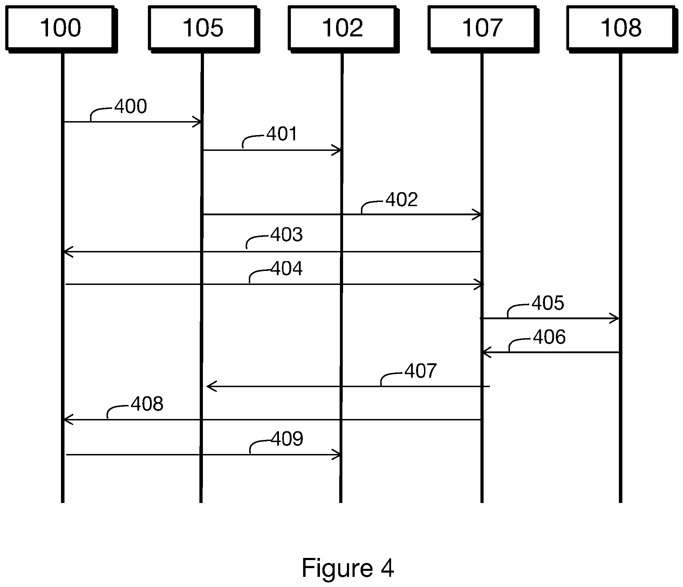

Les différentes étapes du procédé de gestion d'une communication vont maintenant être décrites en relation avec les figures 2 et 4.

La figure 4 représente des messages de signalisation échangés entre les différents terminaux et équipements décrits en référence à la figure 1.

Suite à une action de l'utilisateur, le terminal 100 émet un premier message d'établissement d'appel 400 à destination du terminal 102. Le message 400 transite par le serveur 105 qui détermine la joignabilité du terminal destinataire. Pour cela, il interroge le HLR (Home Location Register, non représenté sur la figure) du réseau mobile 103 afin de localiser le terminal 102 dans le réseau. Le HLR du réseau mobile 103 contient des informations sur les utilisateurs, et notamment l'identifiant public des terminaux abonnés du réseau ainsi que leur localisation.

Quand le terminal 102 a pu être localisé, il retransmet le message d'établissement d'appel 401 au terminal 102, provoquant ainsi la présentation de l'appel sur le terminal 102.

Le message d'établissement d'appel (400, 401) comprend notamment l'identifiant du terminal appelé et l'identifiant du terminal appelant.

L'état de la technique prévoit que lorsque l'utilisateur du terminal 102 n'accepte pas l'appel, la présentation d'appel cesse à l'expiration d'une période prédéterminée. L'appel est alors généralement redirigé vers une messagerie vocale associée à un identifiant du terminal 102. De même, lorsque le terminal 102 n'est pas joignable, l'appel est également redirigé vers la messagerie vocale du destinataire.

Selon l'invention, l'appel peut ne pas être redirigé vers une messagerie vocale en cas de non réponse du destinataire, ou lorsque le terminal 102 n'est pas joignable. A la place, un message 402 comprenant un identifiant associé au terminal appelant 100 et un identifiant associé au terminal appelé 102, ainsi qu'une indication selon laquelle la communication ne peut pas être établie est transmis au serveur 107 du réseau de communication 106. Selon une réalisation particulière, le message comprend en outre une donnée relative à la raison pour laquelle l'appel n'a pas pu être établi avec le terminal 102. La raison peut être que le destinataire n'a pas répondu à l'appel, qu'il a rejeté l'appel, ou encore que le terminal n'est pas joignable.

Lorsque les réseaux 103 et 106 sont distincts, le message transite par un équipement passerelle au moyen duquel les réseaux 103 et 106 sont interconnectés.

Lors d'une première étape 200 représentée sur la figure 2, le serveur 107 reçoit un message 402 comprenant au moins un identifiant associé au terminal appelant 100, un identifiant associé au terminal appelé 102 et une indication selon laquelle la communication ne peut pas être établie. Les identifiants de terminaux compris dans un tel message peuvent être des identifiants publics, comme par exemple des MSISDN ou numéros R.164 associés aux terminaux, ou bien des identifiants de terminaux tels qu'un IMEI. L'indication selon laquelle une communication ne peut pas être établie peut être complétée par une donnée relative à une raison pour laquelle la communication n'a pas pu être établie.

Selon un mode de réalisation particulier, le message 402 est un message conforme au protocole SIP dont les champs « from » et « to » comprennent des identifiants associés aux terminaux, le message comprenant en outre un code d'erreur relatif à la raison pour laquelle l'appel n'a pas pu aboutir. Par exemple, le message peut contenir un code «408 Request Timeout » ou «480 Temporarily Unavailable», « 487 Request Terminated »ou encore « 486 Busy Here ».

A la réception du message 402, et de façon optionnelle, le serveur d'application 107 déclenche au cours de l'étape 201 une procédure de découverte des capacités de communication du terminal 100. Les capacités de communication d'un terminal comprennent par exemple des formats de codage ou des protocoles de communication supportés. Une telle procédure de découverte peut être mise en œuvre par l'envoi d'un message SIP OPTIONS (403) à destination du terminal 102 afin de découvrir les modalités de communications supportées par le terminal, et en particulier afin de déterminer si le terminal 100 supporte un protocole de messagerie instantanée conforme au standard RCS.

Conformément au protocole SIP, le terminal 100 répond au message de découverte 403 par un message 404 de type SIP 200 OK. Le message 404 comprend une description des capacités de communication du terminal. Une telle description peut être transmise sous la forme d'un « feature-tag » dans un header SIP du message 404 ou dans une partie du message 404 conforme au standard SDP (Session Description Protocol) tel que défini dans le document IETF RFC 4566, et peut comprendre des protocoles de communication et des formats de codage supportés par le terminal.

Le serveur 107 obtient l'adresse du terminal 100 à laquelle envoyer le message de découverte des capacités à partir du message 402 reçu au cours de l'étape 200.

L'adresse est obtenue en consultant une base de données dans laquelle des identifiants publics de terminaux sont associés à des adresses de contact. Il s'agit par exemple d'un HSS (Home Subscriber Server) du réseau 106. Le HSS comprend des enregistrements des différents terminaux du réseau, la liste des utilisateurs et les droits et autorisations qui leurs sont associés, ainsi que les sessions des appels en cours. Le serveur 107 peut ainsi obtenir une adresse pour contacter le terminal 100 selon un protocole de messagerie instantanée conforme au standard RCS.

Lors d'une étape 202, le serveur 107 obtient une carte d'accueil configurée au préalable par l'utilisateur du terminal 102.

Selon un mode particulier de réalisation, la carte d'accueil est obtenue en sélectionnant un message particulier dans une base de données 108 dans laquelle sont enregistrées des cartes d'accueil configurées par des utilisateurs. Pour cela, le serveur 107 peut par exemple envoyer une requête SQL 405 (Simple Query Langage) ou XCAP vers la base de données 108, et obtenir en réponse 406 une carte d'accueil. Une carte d'accueil est sélectionnée au moins en fonction d'un identifiant public de l'appelé. Ainsi, la base de données 108 permet d'associer un identifiant public d'un terminal appelé à une carte d'accueil. Selon un mode de réalisation particulier, la carte d'accueil est également associé à un identifiant public de terminal appelant. Une telle disposition permet au serveur 107 de sélectionner une carte d'accueil différenciée selon l'appelant, ou selon un groupe d'appelant.

La base de données 108 peut être un carnet d'adresses en ligne du terminal 102. Ainsi, l'utilisateur du terminal 102 peut configurer pour chaque contact de son carnet d'adresses, ou pour certains contacts seulement, ou encore pour un groupe de contacts particuliers, une carte d'accueil adaptée. L'utilisateur du terminal 102 peut ainsi associer une carte d'accueil particulière pour des contacts professionnels, et un autre type de carte d'accueil pour des contacts personnels.

Selon un mode particulier de réalisation, lorsqu'aucune carte d'accueil n'a pu être sélectionnée, par exemple parce que l'utilisateur du terminal 102 n'a pas configuré de carte d'accueil, une carte par défaut peut être générée par le serveur 107. Le message par défaut peut être généré à partir d'informations comprises dans le HSS, notamment à partir d'information sur d'autres terminaux associés à l'utilisateur. Des moyens de communication alternatifs peuvent ainsi être automatiquement déterminés par le serveur 107 et indiqués dans la carte d'accueil. Le message par défaut peut être généré à partir de statistiques d'usage sur les habitudes de communication de l'utilisateur du terminal 102. Par exemple, le serveur peut consulter la fréquence et/ ou les horaires des appels, le taux de rejet d'appels en fonction d'une plage horaire, ou encore le temps moyen après lequel l'utilisateur du terminal 102 rappelle un correspondant suite à un appel manqué afin de générer une réponse contenant une indication sur le meilleur moment de joindre le correspondant.

Selon un mode particulier de réalisation, lorsqu'aucune carte d'accueil n'a pu être sélectionnée ou lorsqu'aucun mode de communication alternatif n'a pu être déterminé à l'issue de l'étape 201, un message est envoyé en réponse au message 402 reçu à l'étape 200. Ce message de réponse est adapté pour déclencher une redirection de l'appel vers un système de messagerie vocale classique, de façon à ce que l'appelant puisse déposer un message vocal à l'attention de l'appelé. Pour cela, le message envoyé en réponse au message 402 comprend une information adaptée pour identifier la communication à rediriger, comme par exemple un couple identifiant appelant/identifiant appelé. Par exemple, lorsque le réseau 103 est un réseau circuit 2G/3G, le message peut comprendre une commande « Release » pour terminer l'appel. Dans le cas d'un réseau IMS, il peut s'agir d'un message de type SIP CANCEL.

Lorsqu'une carte d'accueil est sélectionnée dans la base de données, un message 407 comportant une indication adaptée pour terminer la tentative d'appel vocal initiée par le terminal 100. Ainsi, le serveur 107 peut commander au serveur 105 de mettre fin à la communication initiée par le terminal 100. De cette manière, la communication n'est pas redirigée vers la messagerie vocale 104. Pour cela, le message 407 peut comprendre des données aptes à identifier la communication à terminer et une instruction de terminaison de ladite communication. La communication peut être identifiée dans le message 407 par un couple identifiant appelant/identifiant appelé, ou directement par un identifiant de la communication obtenu au préalable, par exemple, dans le message 402 transmis par le serveur 105.

Lors d'une étape 203, le serveur 107 envoie la carte sélectionnée vers le terminal 100. Le message peut être envoyé conformément à un protocole de messagerie instantanée, par exemple en moyen d'un message SIP MESSAGE (408) ou d'une connexion conforme au standard MSRP (Message Session Relay Protocol) tel que défini par l'IETF dans le document RCF 4975.

Selon une réalisation particulière de l'invention, la carte d'accueil sélectionnée comprend au moins une information relative à la joignabilité du terminal ou de l'utilisateur du terminal. De telles informations relatives à la joignabilité du terminal appelé sont par exemple des plages horaires préconfigurées ou obtenues à partir d'un agenda de l'utilisateur, des moyens de contacts alternatifs tels qu'une adresse email ou une adresse sur un réseau social, l'identifiant public d'un ou plusieurs autres terminaux. L'information de joignabilité peut aussi comprendre une donnée de localisation du terminal appelé ou du terminal appelant, une vitesse de déplacement, ou encore un statut de présence. Une telle disposition permet de fournir à l'appelant des informations qui permettent d'augmenter les possibilités d'entrer en contact avec l'appelé et de limiter les tentatives d'appel infructueuses qui représentent une charge inutile pour le réseau.

La carte d'accueil peut aussi comprendre une indication sur un mode d'interaction préféré par l'utilisateur appelé. Par exemple, elle peut comprendre une indication selon laquelle le correspondant souhaite être contacté selon une modalité particulière.

Selon un mode de réalisation particulier, les informations de joignabilité comprises dans la carte d'accueil sont associées à au moins un critère de validité. Ainsi, le contenu affiché à partir de la carte d'accueil dépend du moment où il est consulté. Pour cela, le message peut comprendre des instructions permettant de conditionner l'affichage de certaines données en fonction d'une date et de l'heure ou encore d'une localisation du terminal. Les informations de validité peuvent être obtenues par exemple à partir d'un agenda de l'utilisateur appelé, au moyen d'une requête dédiée vers un serveur d'agenda en ligne.

La carte d'accueil peut en outre comporter des composantes multimédias, comme par exemple des images, un clip vidéo ou un document audio configuré par l'utilisateur auquel la carte d'accueil est associée et des informations générales concernant l'appelé, telles que par exemple des horaires d'ouverture, des informations institutionnelles, une adresse postale, ou des propositions commerciales d'une boutique lorsque le terminal 102 est par exemple associé à une ligne d'un professionnel.

Le message peut également comprendre des éléments d'interaction configurés pour permettre à l'utilisateur du terminal 100 de déclencher des actions directement à partir du message. En particulier, le message comprend un élément d'interaction permettant de déclencher une communication vers le terminal 102 ou une adresse alternative fournie dans la carte d'accueil, selon une modalité pouvant être distincte de la première modalité. Ainsi, en consultant la carte d'accueil reçue, un utilisateur du terminal 100 peut, par une simple action sur un élément d'interface défini par le contenu du message, comme par exemple un élément d'interface défini par un élément « suggested action » compris dans une « rich card » RCS, déclencher une communication avec un utilisateur du terminal 102 selon une modalité de communication distincte de la modalité de la communication vocale n'ayant pas abouti. Par exemple, l'action sur l'élément d'interface peut déclencher l'envoi d'un email, d'un SMS ou d'un message instantané, ou permettre d'entrer en contact via un réseau social ou une application de communication particulière, ou encore d'établir une communication vocale vers un autre terminal associé à l'utilisateur.

Le message peut également comporter un élément d'interaction configuré pour permettre à l'utilisateur du terminal 100 d'enregistrer un message vocal sur son terminal et transmettre le message enregistré à un utilisateur du terminal 102 par l'intermédiaire d'un message 409 conforme à un protocole de messagerie instantanée, d'un email ou d'un réseau social. Contrairement à l'art antérieur, le message est enregistré et encodé localement sur le terminal, à partir d'un dispositif d'acquisition audio du terminal. Il est ainsi possible d'offrir une interface ergonomique permettant un enregistrement efficace et de qualité du message. Le message étant envoyé par l'intermédiaire d'un système de messagerie instantané, il sera délivré immédiatement au correspondant dès que le terminal sera joignable.

Pour cela, la carte d'accueil peut être par exemple au format HTML (Hypertext Markup Langage) ou au format XML.

La figure 3 illustre les principales étapes du procédé de réception d'une carte d'accueil par le terminal 100.

Lors d'une première étape 300, le terminal émet un message d'établissement de communication vocale à destination du terminal 102. Le message d'établissement de communication vocale est un message adapté au réseau de télécommunication 103.

A l'étape 301, le terminal reçoit une carte d'accueil générée par un serveur selon un identifiant du terminal 102 et un identifiant du terminal 100. La carte d'accueil reçue est telle qu'elle comprend au moins une information relative à la joignabilité du terminal appelé, la carte d'accueil étant en outre configurée pour permettre le déclenchement d'une communication selon une modalité distincte de la première modalité. Les caractéristiques de la carte d'accueil reçue par le terminal 100 à l'étape 301 sont identiques aux caractéristiques de la carte d'accueil transmise par le serveur 107 lors de l'étape 203 et ne seront pas détaillées à nouveau en relation avec le procédé de réception.

A l'étape 302, un utilisateur du terminal 100 peut, de façon optionnelle, utiliser un des moyens d'interactions proposés par la carte d'accueil pour envoyer un message à un utilisateur du terminal 102, par exemple un message vocal 409 transmis par l'intermédiaire d'un protocole de messagerie instantanée, d'un email ou d'un réseau social.

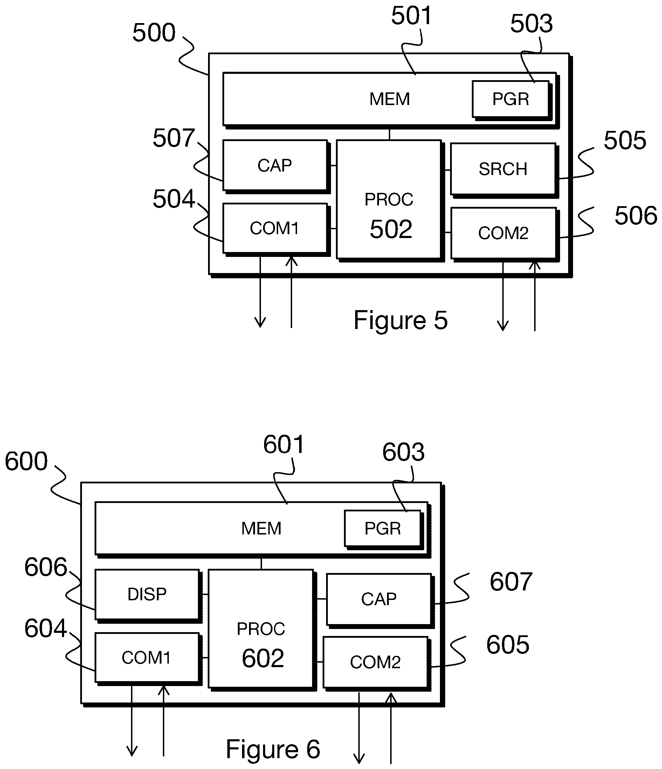

La figure 5 illustre un dispositif 500 mettant en œuvre le procédé de gestion d'une communication, selon un mode particulier de réalisation de l'invention. Le dispositif comprend un espace de stockage 501, par exemple une mémoire MEM, une unité de traitement 502 équipée par exemple d'un processeur PROC. L'unité de traitement peut être pilotée par un programme 503, par exemple un programme d'ordinateur PGR, mettant en œuvre le procédé de gestion d'une communication tel que décrit dans l'invention en référence aux figures 2 et 4, et notamment les étapes de réception d'un message comprenant un identifiant associé au terminal appelé et une indication selon laquelle la communication ne peut pas être établie, d'obtention, à partir des identifiants associés au terminal appelant et au terminal appelé, d'une carte d'accueil comprenant au moins une information relative à la joignabilité de l'utilisateur du terminal appelé, et de transmission, via une connexion conforme à un protocole de messagerie instantanée, de la carte d'accueil obtenue vers terminal appelant, la carte d'accueil étant configurée pour permettre le déclenchement d'une communication selon une modalité distincte de la première modalité.

À l'initialisation, les instructions du programme d'ordinateur 503 (PGR) sont par exemple chargées dans une mémoire RAM (Random Access Memory) avant d'être exécutées par le processeur de l'unité de traitement 502. Les instructions du programme peuvent également être mémorisées sur un support de stockage tel qu'une mémoire flash, un disque dur ou tout autre support de stockage non-transitoire. Le processeur de l'unité de traitement 502 met en œuvre les étapes du procédé de gestion d'une communication entre un terminal appelant et un terminal appelé selon les instructions du programme d'ordinateur 503.

Pour cela, le dispositif 500 comprend un module de communication 504 (COM1) adapté pour recevoir un message comprenant une adresse d'un terminal appelé et une indication selon laquelle une communication ne peut pas être établie avec le terminal appelé. Le dispositif de communication 504 peut être par exemple une carte réseau, comme par exemple une carte Ethernet, adaptée pour recevoir des messages en provenance d'un serveur.

Le dispositif comprend aussi un module d'obtention 505 (SRCH), adapté pour obtenir à partir des identifiants associés au terminal appelant et au terminal appelé, une carte d'accueil comprenant au moins une information relative à la joignabilité de l'utilisateur du terminal appelé. Un tel module d'obtention peut être mis en œuvre par un processeur et une mémoire dans laquelle sont enregistrées des instructions adaptées pour émettre une requête SQL vers une base de données dans laquelle sont stockées des cartes d'accueil en association avec des identifiants publics de terminaux, et recevoir en réponse une carte d'accueil sélectionnée selon des critères tels que l'identifiant publique d'un terminal appelé.

Le dispositif comprend également un module de communication 506 (COM2) adapté pour transmettre la carte d'accueil obtenue vers le terminal appelant, la carte d'accueil étant configuré pour permettre le déclenchement d'une communication selon une modalité distincte de la première modalité. Un tel module de communication peut correspondre à une interface réseau du serveur, par exemple une carte réseau Ethernet associée à une pile protocolaire SIP.

Enfin, selon un mode particulier de réalisation, le dispositif 500 comprend un module 507 (CAP) d'obtention des capacités d'un terminal appelant. Un tel module peut être mis en œuvre par un processeur et une mémoire comprenant des instructions qui, lorsqu'elles sont exécutées par le processeur, commande l'émission d'un message SIP OPTION à destination du terminal appelant afin d'obtenir en réponse un ensemble de capacités de communications.

Un tel dispositif peut avantageusement être intégré à un serveur d'application d'un réseau IMS, tel que le serveur 107.

La figure 6 illustre un dispositif 600 mettant en œuvre le procédé de réception d'une carte d'accueil, selon un mode particulier de réalisation de l'invention. Le dispositif comprend un espace de stockage 601, par exemple une mémoire MEM, une unité de traitement 602 équipée par exemple d'un processeur PROC. L'unité de traitement peut être pilotée par un programme 603, par exemple un programme d'ordinateur PGR, mettant en œuvre le procédé de réception d'une carte d'accueil tel que décrit dans l'invention en référence à la figure 3, et notamment les étapes de transmission, via un protocole de messagerie instantanée, d'un message d'établissement de communication vers le terminal appelé selon la première modalité, et de réception d'une carte d'accueil générée par un serveur selon un identifiant d'un terminal appelé et un identifiant d'un terminal appelant comprenant au moins une information relative à la joignabilité du terminal appelé, et configurée pour permettre le déclenchement d'une communication selon une modalité distincte de la première modalité.

À l'initialisation, les instructions du programme d'ordinateur 603 (PGR) sont par exemple chargées dans une mémoire RAM (Random Access Memory) avant d'être exécutées par le processeur de l'unité de traitement 602. Les instructions du programme peuvent également être mémorisées sur un support de stockage tel qu'une mémoire flash, un disque dur ou tout autre support de stockage non-transitoire. Le processeur de l'unité de traitement 602 met en œuvre les étapes du procédé de réception d'une carte d'accueil selon les instructions du programme d'ordinateur 603.

Pour cela le dispositif 600 comprend, outre la mémoire 601 et l'unité de traitement 602, un module de communication 604, comme par exemple une interface réseau cellulaire, telle qu'une interface GSM, 2G, 3G ou 4G ou encore WiFi. Le module de communication 604 est en outre adapté pour émettre un message d'établissement d'une communication vocale à destination d'un terminal.

Le dispositif 600 comprend aussi un module de communication 605 (COM2) adapté pour recevoir une carte d'accueil en réponse à une communication vocale ne pouvant aboutir. Le module de communication 605 est par exemple une interface réseau cellulaire, telle qu'une interface GSM, 2G, 3G ou 4G ou encore une interface WiFi. Les modules de communications 604 et 605 peuvent être confondus en un unique module de communication.

Le dispositif 600 comprend également un module d'acquisition audio 607 adapté pour capturer un signal audio, l'encoder et le transmettre à un serveur.

Enfin, le dispositif 600 comprend un module d'affichage 606, adapté pour afficher une carte d'accueil telle que décrite ci avant.

Un tel dispositif peut être intégré à un terminal de communication, comme par exemple à un téléphone mobile de type smartphone, une montre connectée, une tablette ou encore un ordinateur personnel.

## Revendications

1. Procédé de gestion d'une communication entre un terminal appelant et un terminal appelé en cas d'impossibilité de joindre un terminal appelé au cours d'une tentative d'établissement d'une communication selon une première modalité, le procédé comprenant les étapes suivantes réalisées par un serveur de communication:
- réception (200) d'un message comprenant un identifiant associé au terminal appelé, au moins un identifiant associé au terminal appelant (100) et une indication selon laquelle la communication ne peut pas être établie,
- obtention (202), à partir des identifiants associés au terminal appelant et au terminal appelé, d'une carte d'accueil comprenant au moins une information relative à la joignabilité de l'utilisateur du terminal appelé,
- transmission (203), en tant que message de réponse et selon un protocole de messagerie instantanée, de la carte d'accueil obtenue vers le terminal appelant, le message de réponse étant configuré pour permettre le déclenchement d'une seconde communication initiée par ledit terminal appelant vers le terminal appelé selon une modalité distincte de la première modalité.

2. Procédé selon la revendication 1 dans lequel l'élément la carte d'accueil comprend un élément d'interaction adapté pour déclencher l'enregistrement d'un message vocal par le terminal appelant et l'envoi du message enregistré par l'intermédiaire d'un protocole de messagerie instantanée.

3. Procédé selon l'une quelconque des revendications précédentes dans lequel la carte d'accueil comprend en outre au moins un identifiant de communication alternatif associé à l'utilisateur du terminal appelé.

4. Procédé selon l'une quelconque des revendications précédentes dans lequel le au moins un identifiant de communication alternatif est sélectionné et inséré dans la carte d'accueil par le serveur de communication selon des critères de joignabilité du terminal appelé.

5. Procédé selon l'une quelconque des revendications précédentes dans lequel la carte d'accueil est en outre générée à partir d'un carnet d'adresses associé au terminal appelé.

6. Procédé selon l'une quelconque des revendications précédentes tel qu'il comprend en outre, lorsqu'une carte d'accueil a été obtenue, une étape de transmission, en réponse au message comprenant une indication selon laquelle la communication ne peut pas être établie, d'un message adapté pour annuler la tentative d'établissement de communication sans redirection vers une messagerie vocale.

7. Procédé selon l'une quelconque des revendications précédentes dans lequel la carte d'accueil est telle que les informations relatives à la joignabilité de l'utilisateur appelé sont associées à au moins un élément sélectionné parmi les éléments compris dans la liste suivante :
- une plage horaire,
- une donnée de localisation du premier terminal et/ou du second terminal,
- une vitesse de déplacement,
- un statut de présence,
- un critère de validité.

8. Procédé selon l'une quelconque des revendications précédentes comprenant en outre une étape d'obtention de capacités de communication du terminal appelant, la carte d'accueil étant transmise selon une technologie de communication compatible avec le terminal appelant.

9. Procédé de réception d'une carte d'accueil par un terminal appelant en cas d'impossibilité de joindre un terminal appelé selon une première modalité, le procédé comprenant les étapes suivantes:
- transmission (300) d'un message d'établissement de communication vers le terminal appelé selon la première modalité,
- réception (301), selon un protocole de messagerie instantanée, d'une carte d'accueil,
le procédé étant **caractérisé en ce que** la carte d'accueil est générée par un serveur selon un identifiant du terminal appelé et un identifiant du terminal appelant, et **en ce qu'**elle comprend au moins une information relative à la joignabilité du terminal appelé, la carte d'accueil étant en outre configurée pour permettre le déclenchement d'une seconde communication initiée par ledit terminal appelant vers le terminal appelé selon une modalité distincte de la première modalité.

10. Dispositif de gestion d'une communication entre un terminal appelant et un terminal appelé en cas d'impossibilité de joindre un terminal appelé selon une première modalité, le dispositif comprenant :
- un module de communication (504) adapté pour recevoir un message comprenant une adresse du terminal appelé, au moins un identifiant associé au terminal appelant (100) et une indication selon laquelle la communication ne peut pas être établie,
- un module d'obtention (505), adapté pour obtenir à partir des identifiants associés au terminal appelant et au terminal appelé, une carte d'accueil comprenant au moins une information relative à la joignabilité de l'utilisateur du terminal appelé,
- un module de communication (506) adapté pour transmettre, selon un protocole de messagerie instantanée, la carte d'accueil obtenue vers terminal appelant, la carte d'accueil étant configurée pour permettre le déclenchement d'une seconde communication initiée par ledit terminal appelant vers le terminal appelé selon une modalité distincte de la première modalité.

11. Serveur de notification comprenant un dispositif de gestion d'une communication selon la revendication 10.

12. Dispositif de réception d'une carte d'accueil par un terminal appelant en cas d'impossibilité de joindre un terminal appelé selon une première modalité, le dispositif comprenant les modules suivants:
- un module de communication (604) adapté pour transmettre un message d'établissement de communication vers le terminal appelé selon la première modalité,
- un module de communication (605) adapté pour recevoir, selon un protocole de messagerie instantanée, une carte d'accueil,
le dispositif étant tel que la carte d'accueil est générée par un serveur selon un identifiant du terminal appelé et un identifiant du terminal appelant, et qu'elle comprend au moins une information relative à la joignabilité du terminal appelé, la carte d'accueil étant en outre configurée pour permettre le déclenchement d'une seconde communication initiée par ledit terminal appelant vers le terminal appelé selon une modalité distincte de la première modalité.

13. Terminal de communication comprenant un dispositif de réception notification selon la revendication 12.

14. Programme d'ordinateur **caractérisé en ce qu'**il comporte des instructions adaptées à la mise en œuvre des étapes du procédé de gestion d'une communication selon l'une quelconque des revendications 1 à 8, ou du procédé de réception d'une carte d'accueil selon la revendication 9, lorsque le programme est exécuté par un processeur.

15. Support d'enregistrement lisible par un ordinateur sur lequel est enregistré un programme d'ordinateur comprenant des instructions pour l'exécution des étapes du procédé de gestion d'une communication selon l'une quelconque des revendications 1 à 8, ou du procédé de réception d'une carte d'accueil selon la revendication 9.

## Patentansprüche

1. Verfahren zur Verwaltung einer Kommunikation zwischen einem anrufenden Endgerät und einem angerufenen Endgerät im Fall der Unmöglichkeit, ein angerufenes Endgerät während eines Aufbauversuchs einer Kommunikation gemäß einer ersten Modalität zu erreichen, wobei das Verfahren die folgenden Schritte enthält, die von einem Kommunikationsserver durchgeführt werden:
- Empfang (200) einer Nachricht, die eine dem angerufenen Endgerät zugeordnete Kennung, mindestens eine dem anrufenden Endgerät (100) zugeordnete Kennung und eine Anzeige enthält, gemäß der die Kommunikation nicht aufgebaut werden kann,
- Erhalt (202), ausgehend von den dem anrufenden Endgerät und dem angerufenen Endgerät zugeordneten Kennungen, einer Begrüßungskarte, die mindestens eine Information bezüglich der Erreichbarkeit des Benutzers des angerufenen Endgeräts enthält,
- Übertragung (203), als Antwortnachricht und gemäß einem Instant-Messaging-Protokoll, der erhaltenen Begrüßungskarte an das anrufende Endgerät, wobei die Antwortnachricht konfiguriert ist, das Auslösen einer vom anrufenden Endgerät initiierten zweiten Kommunikation an das angerufene Endgerät gemäß einer Modalität anders als die erste Modalität zu erlauben.

2. Verfahren nach Anspruch 1, wobei die Begrüßungskarte ein Interaktionselement enthält, das geeignet ist, das Speichern einer Sprachnachricht durch das anrufende Endgerät und das Senden der gespeicherten Nachricht mittels eines Instant-Messaging-Protokolls auszulösen.

3. Verfahren nach einem der vorhergehenden Ansprüche, wobei die Begrüßungskarte außerdem mindestens eine dem Benutzer des angerufenen Endgeräts zugeordnete alternative Kommunikationskennung enthält.

4. Verfahren nach einem der vorhergehenden Ansprüche, wobei die mindestens eine alternative Kommunikationskennung vom Kommunikationsserver gemäß Erreichbarkeitskriterien des angerufenen Endgeräts ausgewählt und in die Begrüßungskarte eingefügt wird.

5. Verfahren nach einem der vorhergehenden Ansprüche, wobei die Begrüßungskarte außerdem ausgehend von einem dem angerufenen Endgerät zugeordneten Adressbuch generiert wird.

6. Verfahren nach einem der vorhergehenden Ansprüche, derart, dass es außerdem, wenn eine Begrüßungskarte erhalten wurde, als Antwort auf die Nachricht, die eine Anzeige enthält, gemäß der die Kommunikation nicht aufgebaut werden kann, einen Schritt der Übertragung einer Nachricht enthält, die geeignet ist, den Aufbauversuch einer Kommunikation ohne Weiterleitung an eine Voicemail abzubrechen.

7. Verfahren nach einem der vorhergehenden Ansprüche, wobei die Begrüßungskarte so ist, dass die Informationen bezüglich der Erreichbarkeit des angerufenen Benutzers mindestens einem Element zugeordnet sind, das unter den in der folgenden Liste enthaltenen Elementen ausgewählt wird:
- eine Zeitspanne,
- ein Lokalisierungsdatenwert des ersten Endgeräts und/oder des zweiten Endgeräts,
- eine Bewegungsgeschwindigkeit,
- ein Anwesenheitsstatus,
- ein Gültigkeitskriterium.

8. Verfahren nach einem der vorhergehenden Ansprüche, das außerdem einen Schritt des Erhalts von Kommunikationskapazitäten des anrufenden Endgeräts enthält, wobei die Begrüßungskarte gemäß einer Kommunikationstechnologie übertragen wird, die mit dem anrufenden Endgerät kompatibel ist.

9. Verfahren zum Empfang einer Begrüßungskarte durch ein anrufendes Endgerät im Fall der Unmöglichkeit, ein angerufenes Endgerät gemäß einer ersten Modalität zu erreichen, wobei das Verfahren die folgenden Schritte enthält:
- Übertragung (300) einer Kommunikationsaufbaunachricht an das angerufene Endgerät gemäß der ersten Modalität,
- Empfang (301) einer Begrüßungskarte gemäß einem Instant-Messaging-Protokoll,
wobei das Verfahren **dadurch gekennzeichnet, dass** die Begrüßungskarte von einem Server gemäß einer Kennung des angerufenen Endgeräts und einer Kennung des anrufenden Endgeräts generiert wird, und dass sie mindestens eine Information bezüglich der Erreichbarkeit des angerufenen Endgeräts enthält, wobei die Begrüßungskarte außerdem konfiguriert ist, das Auslösen einer vom anrufenden Endgerät initiierten zweiten Kommunikation zum angerufenen Endgerät gemäß einer Modalität anders als die erste Modalität zu ermöglichen.

10. Vorrichtung zur Verwaltung einer Kommunikation zwischen einem anrufenden Endgerät und einem angerufenen Endgerät im Fall einer Unmöglichkeit, ein angerufenes Endgerät gemäß einer ersten Modalität zu erreichen, wobei die Vorrichtung enthält:
- ein Kommunikationsmodul (504), das geeignet ist, eine Nachricht zu empfangen, die eine Adresse des angerufenen Endgeräts, mindestens eine dem anrufenden Endgerät (100) zugeordnete Kennung und eine Anzeige enthält, gemäß der die Kommunikation nicht aufgebaut werden kann,
- ein Erhaltsmodul (505), das geeignet ist, ausgehend von den dem anrufenden Endgerät und dem angerufenen Endgerät zugeordneten Kennungen eine Begrüßungskarte zu erhalten, die mindestens eine Information bezüglich der Erreichbarkeit des Benutzers des angerufenen Endgeräts enthält,
- ein Kommunikationsmodul (506), das geeignet ist, die erhaltene Begrüßungskarte gemäß einem Instant-Messaging-Protokoll zum anrufenden Endgerät zu übertragen, wobei die Begrüßungskarte konfiguriert ist, das Auslösen einer vom anrufenden Endgerät initiierten zweiten Kommunikation zum angerufenen Endgerät gemäß einer Modalität anders als die erste Modalität zu ermöglichen.

11. Benachrichtigungsserver, der eine Vorrichtung zur Verwaltung einer Kommunikation nach Anspruch 10 enthält.

12. Vorrichtung zum Empfang einer Begrüßungskarte durch ein anrufendes Endgerät im Fall einer Unmöglichkeit, ein angerufenes Endgerät gemäß einer ersten Modalität zu erreichen, wobei die Vorrichtung die folgenden Module enthält:
- ein Kommunikationsmodul (604), das geeignet ist, eine Nachricht über den Aufbau einer Kommunikation zum angerufenen Endgerät gemäß der ersten Modalität zu übertragen,
- ein Kommunikationsmodul (605), das geeignet ist, eine Begrüßungskarte gemäß einem Instant-Messaging-Protokoll zu empfangen,
wobei die Vorrichtung so ist, dass die Begrüßungskarte von einem Server gemäß einer Kennung des angerufenen Endgeräts und einer Kennung des anrufenden Endgeräts generiert wird, und dass sie mindestens eine Information bezüglich der Erreichbarkeit des angerufenen Endgeräts enthält, wobei die Begrüßungskarte außerdem konfiguriert ist, das Auslösen einer vom anrufenden Endgerät initiierten zweiten Kommunikation zum angerufenen Endgerät gemäß einer Modalität anders als die erste Modalität zu ermöglichen.

13. Kommunikationsendgerät, das eine Empfangsvorrichtung nach Anspruch 12 enthält.

14. Computerprogramm, **dadurch gekennzeichnet, dass** es Anweisungen aufweist, die für die Durchführung der Schritte des Verwaltungsverfahrens einer Kommunikation nach einem der Ansprüche 1 bis 8 oder des Empfangsverfahrens einer Begrüßungskarte nach Anspruch 9 geeignet sind, wenn das Programm von einem Prozessor ausgeführt wird.

15. Computerlesbarer Speicherträger, auf dem ein Computerprogramm gespeichert ist, das Anweisungen zur Ausführung der Schritte des Verwaltungsverfahrens einer Kommunikation nach einem der Ansprüche 1 bis 8 oder des Empfangsverfahrens einer Begrüßungskarte nach Anspruch 9 enthält.

## Claims

1. Method for managing communication between a calling terminal and a called terminal in the event that it is impossible to reach a called terminal in an attempt to establish communication using a first mode, the method comprising the following steps performed by a communication server:
- receiving (200) a message comprising an identifier associated with the called terminal, at least one identifier associated with the calling terminal (100) and an indication according to which the communication is not able to be established,
- obtaining (202) a welcome card comprising at least one item of information relating to the reachability of the user of the called terminal based on the identifiers associated with the calling terminal and with the called terminal,
- transmitting (203) the obtained welcome card to the calling terminal as a response message and in accordance with an instant messaging protocol, the response message being configured so as to make it possible to trigger second communication initiated by said calling terminal to the called terminal using a mode different from the first mode.

2. Method according to Claim 1, wherein the element the welcome card comprises an interaction element designed to trigger the recording of a voice message by the calling terminal and the sending of the recorded message by way of an instant messaging protocol.

3. Method according to either one of the preceding claims, wherein the welcome card furthermore comprises at least one alternative communication identifier associated with the user of the called terminal.

4. Method according to any one of the preceding claims, wherein the at least one alternative communication identifier is selected and inserted into the welcome card by the communication server according to reachability criteria of the called terminal.

5. Method according to any one of the preceding claims, wherein the welcome card is furthermore generated from an address book associated with the called terminal.

6. Method according to any one of the preceding claims, such that it furthermore comprises, when a welcome card has been obtained, a step of transmitting, in response to the message comprising an indication according to which the communication is not able to be established, a message designed to cancel the attempt to establish communication without redirection to voicemail.

7. Method according to any one of the preceding claims, wherein the welcome card is such that the information relating to the reachability of the called user is associated with at least one element selected from among the elements contained in the following list:
- a schedule,
- location data of the first terminal and/or of the second terminal,
- a movement speed,
- a presence status,
- a validity criterion.

8. Method according to any one of the preceding claims, furthermore comprising a step of obtaining communication capabilities of the calling terminal, the welcome card being transmitted using a communication technology compatible with the calling terminal.

9. Method for reception of a welcome card by a calling terminal in the event that it is impossible to reach a called terminal using a first mode, the method comprising the following steps:
- transmitting (300) a message for establishing communication to the called terminal using the first mode,
- receiving (301) a welcome card in accordance with an instant messaging protocol,
the method being **characterized in that** the welcome card is generated by a server depending on an identifier of the called terminal and an identifier of the calling terminal, and **in that** it comprises at least one item of information relating to the reachability of the called terminal, the welcome card furthermore being configured so as to make it possible to trigger second communication initiated by said calling terminal to the called terminal using a mode different from the first mode.

10. Device for managing communication between a calling terminal and a called terminal in the event that it is impossible to reach a called terminal using a first mode, the device comprising:
- a communication module (504) designed to receive a message comprising an address of the called terminal, at least one identifier associated with the calling terminal (100) and an indication according to which the communication is not able to be established,
- an obtainment module (505), designed to obtain a welcome card comprising at least one item of information relating to the reachability of the user of the called terminal based on the identifiers associated with the calling terminal and with the called terminal,
- a communication module (506) designed to transmit the obtained welcome card to the calling terminal in accordance with an instant messaging protocol, the welcome card being configured so as to make it possible to trigger second communication initiated by said calling terminal to the called terminal using a mode different from the first mode.

11. Notification server comprising a device for managing communication according to Claim 10.

12. Device for reception of a welcome card by a calling terminal in the event that it is impossible to reach a called terminal using a first mode, the device comprising the following modules:
- a communication module (604) designed to transmit a message for establishing communication to the called terminal using the first mode,
- a communication module (605) designed to receive a welcome card in accordance with an instant messaging protocol,
the device being such that the welcome card is generated by a server depending on an identifier of the called terminal and an identifier of the calling terminal, and that it comprises at least one item of information relating to the reachability of the called terminal, the welcome card furthermore being configured so as to make it possible to trigger second communication initiated by said calling terminal to the called terminal using a mode different from the first mode.

13. Communication terminal comprising a notification reception device according to Claim 12.

14. Computer program, **characterized in that** it contains instructions designed to implement the steps of the method for managing communication according to any one of Claims 1 to 8 or of the method for receiving a welcome card according to Claim 9 when the program is executed by a processor.

15. Computer-readable recording medium on which there is recorded a computer program comprising instructions for executing the steps of the method for managing communication according to any one of Claims 1 to 8 or of the method for receiving a welcome card according to Claim 9.
